(19) Europäisches Patentamt
European Patent Office
Office européen des brevets

(11) **EP 4 354 352 A1**

(12) **DEMANDE DE BREVET EUROPEEN**

(43) Date de publication:
**17.04.2024 Bulletin 2024/16**

(21) Numéro de dépôt: **23203111.2**

(22) Date de dépôt: **12.10.2023**

(51) Classification Internationale des Brevets (IPC):
**G06N 3/065** [(2023.01)]

(52) Classification Coopérative des Brevets (CPC):
**G06N 3/065**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **14.10.2022 FR 2210609**

(71) Demandeur: **Commissariat à l'énergie atomique et aux énergies alternatives**
**75015 Paris (FR)**

(72) Inventeurs:
• **HIRTZLIN, Tifenn**
  **38054 Grenoble Cedex 09 (FR)**
• **VIANELLO, Elisa**
  **38054 Grenoble Cedex 09 (FR)**
• **BONNET, Djohan**
  **38054 Grenoble Cedex 09 (FR)**

(74) Mandataire: **Cabinet Beaumont**
**4, Place Robert Schuman**
**B.P. 1529**
**38025 Grenoble Cedex 1 (FR)**

(54) **CIRCUIT NEUROMORPHIQUE**

(57) La présente description concerne un circuit neuronal (200) comprenant :
- une première pluralité de synapses, comprenant chacune un premier élément mémoire résistif ayant une capacité parasite associée, chacun des premiers éléments mémoire résistifs étant configuré pour fournir un courant à une première ligne conductrice commune (SL) ; et
- un dispositif de sortie (206) configuré pour comparer une première tension sur la première ligne conductrice commune à une tension seuil ($V_{th}$) et pour générer une tension de sortie ($V_{out}$) du circuit neuronal sur la base de la comparaison.

Fig 2

**Description**

Domaine technique

La présente description concerne de façon générale un circuit neuromorphique et, plus particulièrement, un circuit neuromorphique mis en oeuvre en utilisant une mémoire vive résistive (RRAM).

Technique antérieure

Des circuits neuromorphiques ont été proposés pour reproduire les caractéristiques principales d'un neurone biologique. De tels circuits sont configurés pour intégrer des signaux, provenant d'autres circuits neuromorphiques, dans le temps.

Des circuits neuromorphiques classiques sont basés sur une technologie CMOS (de l'anglais "Complementary Métal Oxide Semiconductor", métal oxyde semiconducteur complémentaire). Une mémoire vive statique (SRAM) ou une mémoire vive résistive (RRAM) est utilisée pour stocker l'équivalent du coefficient synaptique. Des condensateurs de taille importante sont utilisés pour mettre en oeuvre les neurones dynamiques, équivalents au potentiel de membrane d'un neurone biologique. Selon une variante, des solutions numériques peuvent être utilisées, en échantillonnant des signaux et en les copiant vers une mémoire externe.

Toutefois, l'utilisation de condensateurs de taille importante ou de solutions numériques requiert généralement une consommation d'énergie et/ou une surface de circuit excessives.

Résumé de l'invention

Il existe un besoin dans l'état de la technique de mettre en oeuvre des circuits neuromorphiques qui pallient tout ou partie des problèmes de l'état de l'art.

Des modes de réalisation de la présente description pallient tout ou partie des inconvénients des circuits neuronaux connus.

Selon un aspect, on prévoit un circuit neuronal comprenant :

- une première pluralité de synapses, comprenant chacune un premier élément mémoire résistif ayant une capacité parasite associée, chacun des premiers éléments mémoire résistifs étant configurés pour fournir un courant à une première ligne conductrice commune ; et
- un dispositif de sortie configuré pour comparer une première tension sur la première ligne conductrice commune à une tension seuil et pour générer une tension de sortie du circuit neuronal sur la base de la comparaison.

Selon un mode de réalisation, le dispositif de sortie est un comparateur de tension configuré pour générer une transition de la tension de sortie du circuit neuronal lorsque la première tension dépasse la tension seuil.

Selon un mode de réalisation, le dispositif de sortie est un amplificateur de tension configuré pour générer une tension de sortie analogique.

Selon un mode de réalisation, le circuit neuronal comprend en outre un premier circuit de retard relié à une sortie du comparateur de tension et configuré pour réinitialiser la première tension sur la première ligne conductrice commune en réponse à la transition de la tension de sortie.

Selon un mode de réalisation, le premier circuit de retard est configuré pour propager avec retard la transition de la tension de sortie et pour provoquer ainsi la décharge complète de chacune des capacités parasites lorsque la première tension devient supérieure à la tension seuil.

Selon un mode de réalisation, le premier élément résistif de chaque synapse est relié à une sortie d'un circuit neuronal correspondant supplémentaire.

Selon un mode de réalisation, le premier élément résistif de chaque synapse est relié à une tension d'alimentation par l'intermédiaire d'un premier transistor correspondant, chacun des premiers transistors ayant sa grille reliée à une sortie d'un circuit neuronal correspondant supplémentaire.

Selon un mode de réalisation, chaque synapse comprend en outre un deuxième élément mémoire résistif ayant une capacité parasite associée, chacun des deuxièmes éléments mémoire résistifs étant configuré pour fournir un courant à une deuxième ligne conductrice commune, la deuxième ligne conductrice fournissant la tension seuil au dispositif de sortie.

Selon un mode de réalisation, le deuxième élément résistif de chaque synapse est relié à la sortie du circuit neuronal correspondant supplémentaire.

Selon un mode de réalisation, le deuxième élément résistif de chaque synapse est relié à la tension d'alimentation par l'intermédiaire d'un deuxième transistor correspondant, chacun des deuxièmes transistors ayant sa grille reliée à une sortie du circuit neuronal correspondant supplémentaire.

Selon un mode de réalisation, le circuit neuronal comprend en outre un deuxième circuit de retard relié à la sortie du comparateur de tension et configuré pour réinitialiser la tension seuil sur la deuxième ligne conductrice commune en réponse à la transition de la tension de sortie.

Selon un mode de réalisation, les premiers éléments mémoire résistifs sont des éléments à jonction ferro-tunnel.

Selon un mode de réalisation, la capacité parasite associée à chaque élément mémoire résistif est située uniquement dans la synapse.

Selon un mode de réalisation, la première tension sur la première ligne conductrice commune à un instant t respecte l'équation suivante :

$$V_{SL} = \frac{1}{C} \int_0^t \sum_{i=0}^{N} V_i(s) G_i ds,$$

où, N est le nombre de synapse, $C = \sum_{i=0}^{N} C_i$ , $C_i$ étant la valeur de la capacité parasite associée à une synapse, $V_i(s)$ est une tension appliquée entre des électrodes de l'élément résistif ($G_i$, $G_i^p$ ) à un instant $s$, antérieur à l'instant $t$, et où $G_i$ est la conductance de l'élément résistif.

Selon un mode de réalisation, le dispositif de sortie comprend un transistor configuré pour décharger la capacité parasite associée lorsque la première tension devient supérieure à la tension de seuil.

Selon un aspect, il est prévu un réseau neuronal comprenant une pluralité de couches de circuits neuronaux tels que décrits précédemment.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente schématiquement une mise en oeuvre matérielle d'un circuit neuronal à impulsions à base de CMOS selon un mode de réalisation qui a été proposé ;

la figure 2 représente schématiquement un circuit neuronal à base de RR_AM selon un mode de réalisation de la présente description ;

la figure 3 représente schématiquement un circuit neuronal à base de RRAM selon un autre mode de réalisation de la présente description ;

la figure 4 représente un exemple d'un empilement à jonction ferro-tunnel et son circuit équivalent ;

la figure 5 représente schématiquement un circuit neuronal à impulsions à base de RRAM selon un mode de réalisation de la présente description ;

la figure 6 est un chronogramme représentant des tensions présentes dans le circuit neuronal à impulsions à base de RR_AM de la figure 5 selon un exemple de mode de réalisation ;

la figure 7 représente schématiquement un circuit neuronal à base de RR_AM ayant une structure différentielle selon un mode de réalisation de la présente description ;

la figure 8 représente schématiquement un circuit neuronal à impulsions à base de RR_AM ayant une structure différentielle selon un mode de réalisation de la présente description ;

la figure 9 est un chronogramme représentant des tensions présentes dans le circuit neuronal à impulsions à base de RR_AM de la figure 8 selon un exemple de mode de réalisation ;

la figure 10 est un chronogramme représentant des tensions présentes dans le circuit neuronal à impulsions à base de RR_AM de la figure 8 selon un autre exemple de mode de réalisation ;

la figure 11 représente schématiquement un circuit neuronal analogique à base de RRAM ayant une structure différentielle selon un autre mode de réalisation de la présente description ;

la figure 12 est un chronogramme représentant des tensions présentes dans le circuit neuronal analogique à base de RRAM de la figure 11 selon un exemple de mode de réalisation de la présente description ; et

la figure 13 représente schématiquement un réseau neuronal constitué d'une pluralité de circuits neuronaux selon une exemple de mode de réalisation de la présente description.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. Par exemple, des circuits et procédés de programmation de la résistance d'un élément mémoire résistif n'ont pas été décrits en détail, la sélection de circuits et procédés appropriés en fonction du type particulier d'élément mémoire résistif entrant dans les compétences de la personne du métier.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans les différents modes de réalisation, des transistors sont décrits comme ayant des noeuds de conduction principaux et un noeud de grille, sans limitation à une quelconque technologie particulière de transistor. La personne du métier comprendra que, dans le cas où les transistors sont réalisés par des transistors MOS, les noeuds de conduction principaux sont la source et le drain. Sauf précision contraire, les transistors MOS sont des dispositifs à canal N, bien que la personne du métier sache comment adapter les modes de réalisation au cas de transistors MOS à canal P. Il serait également possible d'utiliser d'autres technologies de transistor. Par exemple, dans le cas de transistors bipolaires, les noeuds de conduction principaux sont les collecteur et émetteur et la grille est mise en oeuvre par la base.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

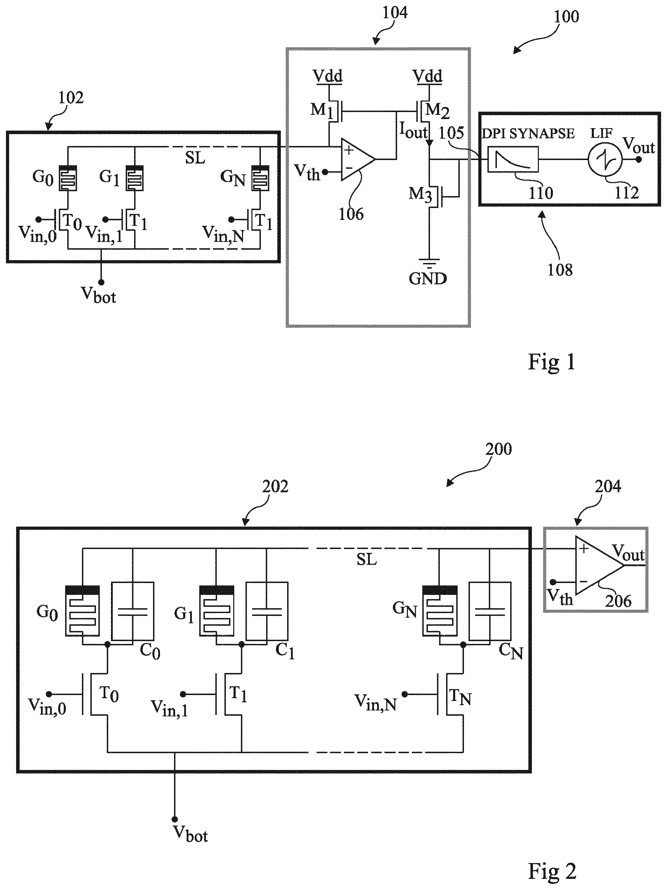

La figure 1 représente schématiquement une mise en oeuvre matérielle d'un circuit neuronal à impulsions à base de CMOS 100 selon un mode de réalisation qui a été proposé. Par exemple, le circuit neuronal 100 fait partie d'un réseau neuronal (non représenté en figure 1) comprenant une pluralité de circuits neuronaux similaires au circuit 100.

Le circuit neuronal 100 comprend trois étages.

Un premier étage 102 comprend par exemple une matrice mémoire vive résistive (RRAM). Par exemple, la matrice RR_AM 102 comprend un nombre $N + 1$ d'éléments résistifs programmables $G_0$ à $G_N$ mettant en oeuvre les synapses du circuit neuronal 100. Chaque élément résistif $G_i$, $i \in \{0,..., N\}$ a par exemple une première électrode, par exemple son électrode inférieure, reliée à un rail de tension d'alimentation à une tension $V_{bot}$ par l'intermédiaire d'un transistor correspondant $T_i$. Chaque transistor $T_i$, $i \in \{0,...,N\}$ a sa grille reliée pour recevoir une tension correspondante $V_{in,i}$, $i \in \{0, ...,N\}$ fournie par un autre circuit neuronal du réseau neuronal ou par un noeud d'entrée du réseau neuronal. Chaque élément résistif $G_i$, $i \in \{0, ..., N\}$ a par exemple une deuxième électrode, par exemple son électrode supérieure, reliée à une ligne conductrice commune SL. Ainsi, la matrice RRAM 102 est constituée de $N + 1$ branches reliées entre la ligne conductrice SL et le rail de tension d'alimentation $V_{bot}$, chaque branche comprenant la connexion en série d'un élément résistif $G_i$, $i \in \{0, ..., N\}$ et d'un transistor $T_i$.

Un deuxième étage 104 du circuit neuronal 100 est un circuit de réplication du courant ayant une mise en oeuvre CMOS analogique et configuré pour générer un courant sur sa ligne de sortie 105 qui est égal ou proportionnel à la somme des courants traversant les $N + 1$ branches de la matrice RR_AM 102. Par exemple, le circuit de réplication du courant 104 comprend un transistor $M_1$ relié par ses noeuds de conduction principaux entre un rail de tension d'alimentation à une tension $Vdd$ et la ligne conductrice SL et un transistor $M_2$ relié par ses noeuds de conduction principaux entre le rail de tension d'alimentation $Vdd$ et la ligne de sortie 105. La tension d'alimentation $Vdd$ est par exemple supérieure à la tension d'alimentation $V_{bot}$. Le circuit de réplication du courant 104 comprend en outre un amplificateur opérationnel 106 ayant une entrée positive reliée à la ligne conductrice SL, une entrée négative reliée à une tension seuil $V_{th}$ et sa sortie reliée aux grilles des transistors $M_1$ et $M_2$. La tension seuil $V_{th}$ est une tension intermédiaire entre les tensions $V_{bot}$ et $Vdd$ et l'amplificateur opérationnel 106 est par exemple configuré pour régler la tension de grille des transistors $M_1$ et $M_2$ de sorte que la tension sur la ligne conductrice SL soit égale à la tension seuil $V_{th}$. Ainsi, le transistor $M_2$ conduit un courant $I_{out}$ égal ou proportionnel au courant dans le transistor $M_1$. Le circuit de réplication du courant 104 comprend en outre un transistor $M_3$ relié en série au transistor $M_2$, ayant par exemple ses noeuds de conduction principaux reliés respectivement à la ligne de sortie 105 et à la masse (GND). La grille du transistor $M_3$ est par exemple reliée à la ligne de sortie 105, qui fournit un courant au troisième étage 108. Par exemple, le courant fourni par la ligne de sortie 105 charge un condensateur (non représenté) du troisième étage 108.

Un troisième étage 108 comprend par exemple une synapse 110 (DPI SYNAPSE) à intégrateur de paires différentielles (DPI) et un neurone à intégration-et-tir avec fuite (LIF) 112. La synapse DPI 110 reçoit par exemple le signal de sortie du circuit de réplication du courant 104 et effectue une intégration de ce signal. Le neurone LIF 112 reçoit par exemple le signal intégré en provenance de la synapse DPI 110 et génère une tension de sortie $V_{out}$ ayant une impulsion lorsque le signal intégré dépasse un seuil.

Un problème avec le circuit neuronal 100 de la figure 1 est que des capacités relativement élevées sont présentes dans la synapse DPI 110 et le neurone LIF 112, conduisant à une consommation d'énergie et à une surface relativement importantes. Cela est un problème sérieux lorsque la complexité du réseau neuronal augmente, impliquant un nombre relativement grand de neurones.

La figure 2 représente schématiquement un circuit neuronal à base de RRAM 200 selon un exemple de mode de réalisation de la présente description.

Le circuit neuronal 200 comprend un étage d'entrée 202 et un étage de sortie 204.

L'étage d'entrée 202 comprend par exemple une matrice mémoire vive résistive (RRAM). Par exemple, la matrice RRAM 202 comprend un nombre $N + 1$ d'éléments résistifs programmables $G_0$ à $G_N$ mettant en oeuvre les synapses du circuit neuronal 100. Similairement au circuit neuronal 100 de la figure 1, chaque élément résistif $G_i$, i ∈ {0, ..., N} a par exemple une de ses électrodes, par exemple son électrode supérieure, reliée à une ligne conductrice commune SL.

Chaque élément résistif $G_i$, i ∈ {0, ..., N} de la matrice mémoire 202 a par exemple une première électrode, par exemple son électrode inférieure, reliée à un rail de tension d'alimentation $V_{bot}$ par l'intermédiaire d'un transistor correspondant $T_i$. Chaque transistor $T_i$, i ∈ {0, ...,N} a par exemple sa grille reliée pour recevoir une tension correspondante $V_{in,i}$, i ∈ {0, ... , N} fournie par un autre circuit neuronal du réseau neuronal ou par un noeud d'entrée du réseau neuronal. Ainsi, la matrice RRAM 202 est constituée de $N + 1$ branches reliées entre la ligne conductrice SL et le rail de tension d'alimentation $V_{bot}$, chaque branche comprenant la connexion en série d'un élément résistif $G_i$, i ∈ {0, ... , N}, avec sa capacité associée $C_i$, et d'un transistor correspondant $T_i$.

Par conséquent, la tension $V_{SL}$ sur la ligne conductrice SL à un instant donné t respecte l'équation :

[Math 1]

$$V_{SL} = \frac{1}{C} \int_0^t \sum_{i=0}^{N} V_i(s) G_i \, ds,$$

où $C = \sum_{i=0}^{N} C_i$ et $V_i(s)$ est la tension individuelle qui est appliquée entre les électrodes de l'élément résistif $G_i$ à un instant $s$, et $G_i$ est la conductivité de l'élément résistif $G_i$. La tension $V_i(s)$ dépend des tensions $V_{bot}$ et $V_{in,i}$.

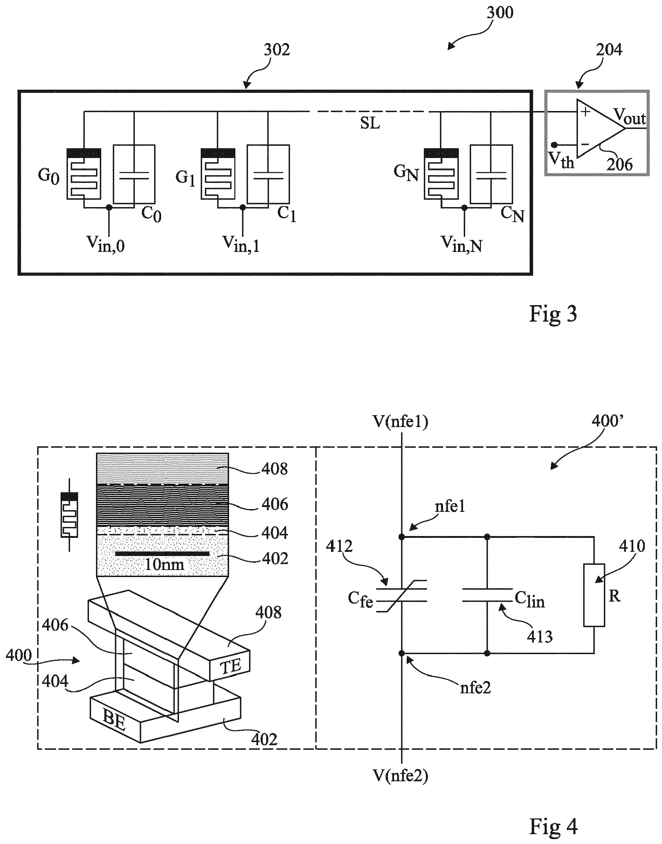

Chaque élément résistif $G_i$, i ∈ {0, ..., N} a une capacité parasite $C_i$, i ∈ {0, ...,N}, correspondant à l'effet de faible capacité de chaque élément résistif. Le type de mémoire de l'élément résistif $G_i$ est par exemple choisi de sorte que les capacités parasites $C_i$ soient relativement élevées, ce qui conduit à une capacité relativement élevée au niveau de la ligne conductrice commune SL. Par exemple, comme cela sera décrit plus en détail ci-après en relation avec la figure 4, dans certains modes de réalisation, chaque élément résistif $G_i$, i ∈ {0, ..., N} est mis en oeuvre par un élément à jonction ferro-tunnel. Des éléments à jonction ferro-tunnel sont bien connus de la personne du métier et sont par exemple décrits plus en détail dans la publication "Low-power linear computation using nonlinear ferroelectric tunnel junction memristors" publiée dans "Nature Electronics 3.5 (2020)" par Berdan, Radu, et al. Selon une variante, il serait possible d'utiliser d'autres types d'éléments mémoire résistifs, en particulier, ceux ayant des capacités parasites relativement élevées, tels que, par exemple, des transistors à effet de champ ferroélectriques (FeFET) ou des dispositifs OxRAM à haute résistance.

L'étage de sortie 204 du circuit neuronal 200 comprend par exemple un comparateur 206 ayant une entrée positive reliée à la ligne conductrice commune SL et une entrée négative reliée à une tension seuil $V_{th}$. Le comparateur

206 est par exemple configuré pour comparer la tension sur la ligne conductrice commune SL à la tension seuil $V_{th}$ et pour générer une transition d'une tension de sortie $V_{out}$ du circuit neuronal 200 lorsque la tension sur la ligne conductrice commune SL dépasse la tension seuil $V_{th}$.

Selon des modes de réalisation décrits ici, l'effet capacitif des éléments résistifs $G_i$ de la matrice mémoire 202 remplace des condensateurs à intégrer dans la synapse DPI et/ou les circuits neuronaux LIF de l'étage 108 de la figure 1. En particulier, en fonctionnement, la ligne conductrice commune SL est chargée par la somme des courants traversant chacune des N+1 branches de l'étage d'entrée 202 et le comparateur 206 est utilisé pour détecter le moment auquel la tension sur la ligne conductrice commune SL dépasse la tension seuil $V_{th}$ et pour générer une transition de sortie correspondante dans la tension de sortie $V_{out}$

La figure 3 représente schématiquement un circuit neuronal à base de RRAM 300 selon un autre mode de réalisation de la présente description. Le circuit neuronal 300 est similaire au circuit neuronal 200 de la figure 2 et comprend le même étage de sortie 204, mais comprend un étage d'entrée 302 au lieu de l'étage d'entrée 202.

L'étage d'entrée 302 est similaire à l'étage d'entrée 202 en ce qu'il comprend N+1 branches comprenant chacune un élément résistif $G_i$, $i \in \{0,... , N\}$ dont une des électrodes, par exemple son électrode supérieure, est reliée à la ligne conductrice commune SL. Toutefois, au lieu d'être reliée à un transistor $T_i$, l'autre électrode de chaque élément résistif $G_i$, $i \in \{0, ... , N\}$, qui est par exemple son électrode inférieure, est reliée directement à la tension correspondante $V_{in,i}$, $i \in \{0, ... , N\}$ fournie par un autre circuit neuronal du réseau neuronal ou par un nœud d'entrée du réseau neuronal. En d'autres termes, les transistors $T_i$ décrits en relation avec la figure 2 sont omis dans le mode de réalisation de la figure 3.

Le fonctionnement du circuit neuronal 300 de la figure 3 est similaire à celui du circuit neuronal 200 de la figure 2, si ce n'est que la tension appliquée à chaque élément résistif $G_i$, $i \in \{0, ...,N\}$ n'est plus fonction de la tension d'alimentation $V_{bot}$, mais seulement de la tension d'entrée correspondante $V_{in,i}$, $i \in \{0, ..., N\}$.

La figure 4 représente un exemple d'un élément à jonction ferro-tunnel (FTJ) 400 et son circuit équivalent 400'. L'élément FTJ 400 est par exemple utilisé pour mettre en oeuvre les éléments résistifs $G_i$ dans les circuits neuronaux 200 et 300 des figures 2 et 3.

L'élément FTJ 400 est par exemple constitué d'un empilement de couches comprenant une électrode inférieure 402 (BE), une couche de dioxyde de silicium 404 ($SiO_2$) formée dans l'électrode inférieure 402, une couche d'oxyde de silicium et d'hafnium 406 (HfSiO) formée sur la couche de dioxyde de silicium 404 et une électrode supérieure 408 (TE) formée sur la couche d'oxyde de silicium et d'hafnium 406.

Comme cela est représenté par le circuit équivalent 400', l'élément FTJ 400 peut être considéré comme ayant une résistance de fuite 410 d'une résistance $R$, en parallèle avec un ferro-condensateur 412 d'une capacité $C_{fe}$, les résistance 410 et ferro-condensateur 412 étant en parallèle avec un condensateur linéaire 413 de capacité $C_{lin}$. La capacité $C_{fe}$ du ferro-condensateur 412 est par exemple non linéaire.

Le courant $I_D$ qui circule dans un élément FTJ est un courant tunnel, qui n'est pas linéaire en fonction de la tension appliquée. Ce courant est également relativement faible par rapport à celui qui circule dans la plupart des autres types de dispositifs mémoire résistifs. Dans un tel élément ferroélectrique, en réglant la polarisation ferroélectrique, un courant tunnel continu, ou un effet tunnel assisté Fowler Nordheim, peuvent apparaître. Cette propriété physique permet la création de plusieurs états résistifs dans des éléments FTJ.

Le courant $I_D$ qui circule dans un élément FTJ est décrit par l'équation :

[Math 2]

$$I_D = I_R + I_C,$$

où

[Math 3]

$$I_R = K_0 S \big( \exp(V/(V_{PO} - \Delta V_P P/P_{sat})) - 1 \big)$$

et

[Math 4]

$$I_C = C \frac{dV}{dt},$$

où $K_0$ est une constante d'ajustement, $S$ est la surface totale du dispositif, $V$ est la tension appliquée entre les électrodes inférieure et supérieure, et $V_{PO}$ et $\Delta V_P$ sont des constantes d'ajustement. Comme la valeur $P$ est la polarisation qui peut commuter essentiellement entre des polarisations $+Pr$ et $-Pr$, en fonction de la polarisation réelle, la tension $V$ commutera entre des valeurs de tension $V_{PO}+\Delta V_P$ et $V_{PO}-\Delta V_P$.

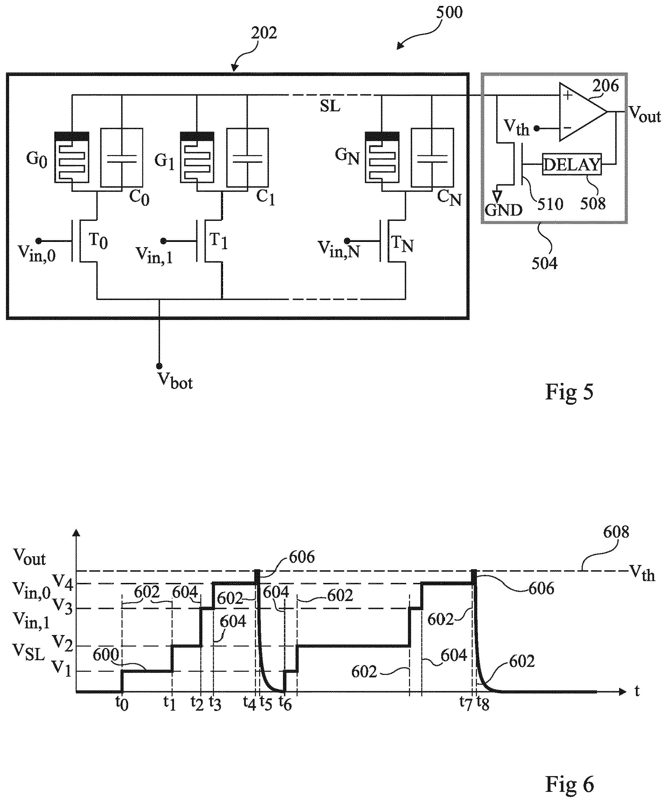

La figure 5 représente schématiquement un circuit neuronal à impulsions à base de RRAM 500. Le circuit neuronal 500 est similaire au circuit neuronal 200 de la figure 2 et comprend le même étage d'entrée 202, mais comprend un étage de sortie 504 remplaçant l'étage de sortie 204.

L'étage de sortie 504 comprend par exemple le comparateur 206 ayant son entrée positive reliée à la ligne conductrice SL et son entrée négative reliée à la tension seuil $V_{th}$. La sortie du comparateur 206 est en outre reliée à un circuit de retard 508 (DELAY). Le circuit de retard 508 a une sortie reliée à la grille d'un transistor 510. Par exemple, le circuit de retard 508 est configuré pour fournir la transition de tension présente à la sortie du comparateur 506 au transistor 510 après un retard. Le circuit de retard 508 est, par exemple, mis en oeuvre par la connexion en série d'un nombre pair d'inverseurs, bien que la personne du métier comprendra que d'autres modes de réalisation soient possibles.

Le transistor 510 a ses noeuds de conduction principaux reliés respectivement à la ligne conductrice SL et au rail de tension de masse (GND).

En fonctionnement, lorsque la tension sur la ligne conductrice commune SL dépasse la tension seuil $V_{th}$, le comparateur 206 génère une transition de tension de la tension de sortie $V_{out}$ et les circuit de retard 508 et transistor 510 amènent par exemple la tension sur la ligne conductrice commune SL à être réinitialisée à une tension proche de la tension de masse après un retard qui suit la transition de tension de la tension de sortie $V_{out}$. En outre, la réinitialisation de la tension sur la ligne conductrice commune SL réinitialise à son tour la tension de sortie $V_{out}$ du comparateur 206. Cela signifie que, lorsque la tension sur la ligne conductrice commune SL dépasse la tension seuil $V_{th}$, l'étage de sortie 504 générera une pulsation de tension sur la tension de sortie $V_{out}$, la durée de la pulsation de tension étant fonction du retard introduit par le circuit de retard 508.

La figure 6 est un chronogramme représentant des tensions présentes dans le circuit neuronal à impulsions à base de RRAM 500 décrit en relation avec la figure 5 selon un exemple de mode de réalisation. Par souci de clarté, on considère un cas dans lequel des impulsions d'entrée sont présentes sur seulement les tensions d'entrée $V_{in,0}$ et $V_{in,1}$ des transistors $T_0$ et $T_1$ du circuit neuronal 500.

La figure 6 représente l'évolution temporelle de la tension de sortie $V_{out}$ et de la tension $V_{SL}$ sur la ligne conductrice SL en fonction de la contribution des tensions $V_{in,0}$ et $V_{in,1}$. La valeur de tension $V_{SL}$ est représentée par une courbe 600 et est initialement proche de la tension de masse. La synchronisation des impulsions de tension de la tension $V_{in,0}$ est représentée par des lignes en traits discontinus 602 et la synchronisation des impulsions de tension de la tension $V_{in,1}$ est représentée par des lignes en traits mixtes 604. La tension de sortie $V_{out}$ du comparateur 206 est représentée par une courbe 606. De plus, la tension seuil $V_{th}$ est représentée par une ligne en traits discontinus 608.

Dans l'exemple représenté en figure 6, la tension d'entrée $V_{in,0}$ a une impulsion qui survient à un instant $t_0$. Par exemple, l'impulsion de la tension $V_{in,0}$ est générée par un autre circuit neuronal. Cette impulsion de tension provoque par exemple une augmentation de la tension $V_{SL}$ sur la ligne conductrice commune SL, de sorte qu'elle atteigne un premier niveau de tension $V_1$. De façon similaire, la tension d'entrée $V_{in,0}$ a une autre impulsion qui survient à un instant $t_1$ amenant la tension $V_{SL}$ sur la ligne conductrice commune SL à croître jusqu'à un deuxième niveau de tension $V_2$, la tension d'entrée $V_{in,1}$ a une impulsion qui apparaît à un instant $t_2$ amenant la tension $V_{SL}$ sur la ligne conductrice commune SL à croître jusqu'à un troisième niveau de tension $V_3$ et la tension d'entrée $V_{in,1}$ a une autre impulsion qui survient à un instant $t_3$ amenant la tension $V_{SL}$ sur la ligne conductrice commune SL à croître jusqu'à un quatrième niveau de tension $V_4$. Ensuite, à un instant $t_4$, la tension d'entrée $V_{in,0}$ a une autre impulsion qui amène la tension $V_{SL}$ sur la ligne conductrice commune SL à dépasser la tension seuil $V_{th}$.

L'étage de sortie 504 génère donc une pulsation de tension de la tension de sortie $V_{out}$ à l'instant $t_4$, qui se prolonge jusqu'à un instant $t_5$. La durée de la pulsation est par exemple comprise entre 1 microseconde et 10 millisecondes. En particulier, lorsque la tension $V_{SL}$ dépasse la tension seuil $V_{th}$ à l'instant $t_4$, le comparateur 206 fournit en sortie le front montant de la pulsation de tension. Le circuit de retard 508 fournit en sortie un front montant après son retard, qui active le transistor 510, amenant la tension $V_{SL}$ à être déchargée vers la tension de masse. Dès que la tension $V_{SL}$ chute en-dessous de la tension seuil $V_{th}$, le comparateur 206 génère un front descendant sur la tension de sortie $V_{out}$, achevant la pulsation de tension. Le circuit de retard 508 génère un front descendant après son retard et, en même temps, la tension $V_{SL}$ continue à chuter à un niveau proche de la tension de masse, ce qui est représenté par une phase décroissante de la courbe 600.

Le processus se répète ensuite pour d'autres séries d'impulsions des tensions d'entrée $V_{in,0}$ et $V_{in,1}$ entre des instants $t_6$ et $t_7$ et l'impulsion à l'instant $t_7$ amène par exemple la tension $V_{SL}$ sur la ligne conductrice commune à dépasser la tension seuil $V_{th}$. Par conséquent, l'étage de sortie 504 génère la pulsation sur la tension de sortie $V_{out}$ à partir de l'instant $t_7$ jusqu'à un $t_8$. Le transistor 510, commandé par le circuit de retard 508, réinitialise par exemple la tension $V_{SL}$ à une tension proche de la masse.

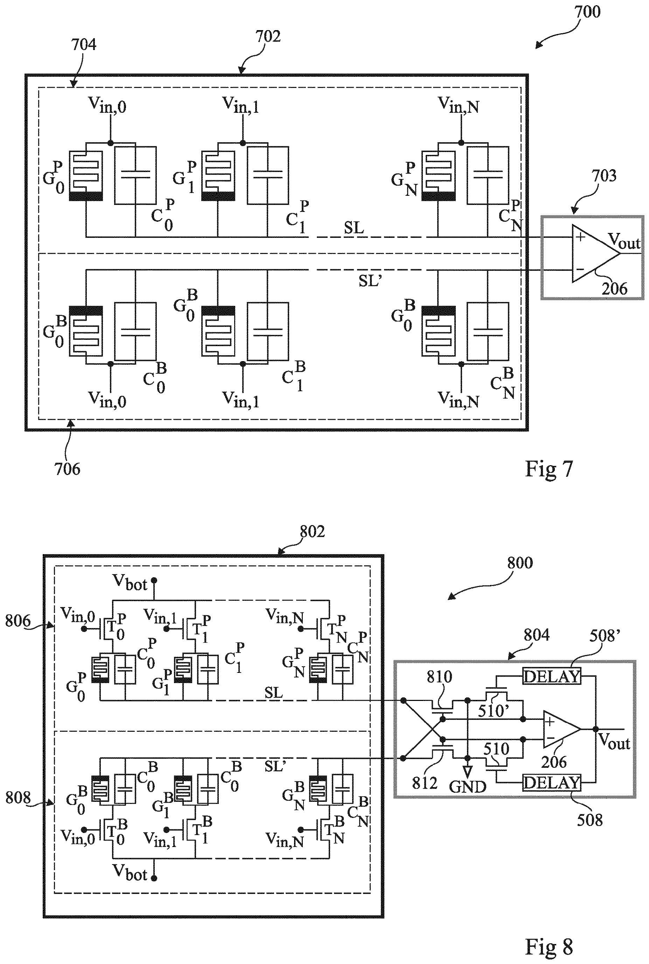

La figure 7 représente schématiquement un circuit neuronal à base de RRAM 700 ayant une structure différentielle selon un mode de réalisation de la présente description. Le circuit neuronal 700 comprend un étage d'entrée différentiel 702 et un étage de sortie 703 comprenant le comparateur 206.

L'étage d'entrée différentiel 702 est similaire à l'étage d'entrée 302 en ce qu'il comprend un ensemble 704 de N+1 branches comprenant chacune un élément résistif correspondant $G_i^P$, $i \in \{0, ... , N\}$ qui a une capacité parasite associée $C_i^P$, $i \in \{0, ... , N\}$. Chaque élément résistif $G_i^P$, $i \in \{0,...,N\}$ a en outre une de ses électrodes, par exemple son électrode supérieure, reliée à la ligne conductrice commune SL. L'autre électrode de chaque élément résistif $G_i^P$, $i \in \{0, ...,N\}$, qui est par exemple son électrode inférieure, est reliée directement à la tension correspondante $V_{in,i}$, $i \in \{0, ... , N\}$ fournie par un autre circuit neuronal du réseau neuronal ou par un noeud d'entrée du réseau neuronal. La ligne conductrice commune SL est reliée à l'entrée positive du comparateur 206.

L'étage d'entrée différentiel 702 comprend en outre un ensemble 706 de N+1 branches supplémentaires, comprenant chacune un élément résistif correspondant $G_i^B$, $i \in \{0, ... , N\}$ qui a une capacité parasite associée $C_i^B$, $i \in \{0, ...,N\}$. Chaque élément résistif $G_i^B$, $i \in \{0, ... , N\}$ a en outre une de ses électrodes, par exemple son électrode supérieure, reliée à une autre ligne conductrice commune SL'. L'autre électrode de chaque élément résistif $G_i^B$, $i \in \{0, ...,N\}$, qui est par exemple son électrode inférieure, est reliée directement à la tension correspondante $V_{in,i}$, $i \in \{0, ... , N\}$. En d'autres termes, pour chaque $i \in \{0, ...,N\}$, les éléments résistifs $G_i^P$ et $G_i^B$ sont reliés, par exemple par leur électrode inférieure, à la même tension $V_{in,i}$, $i \in \{0, ... , N\}$.

De plus, la ligne conductrice commune SL' est reliée à l'entrée négative du comparateur 206.

En fonctionnement, la ligne conductrice commune SL sera chargée par la somme des courants circulant dans chacune des N+1 branches de l'ensemble 704, alors que la ligne conductrice commune SL' sera chargée par la somme des courants circulant dans chacune des N+1 branches de l'ensemble 706. Le comparateur 206 est ensuite utilisé pour détecter le moment auquel la tension $V_{SL}$ sur la ligne conductrice commune SL dépasse la tension $V_{SL}'$ sur la ligne conductrice commune SL' et pour générer une transition de sortie correspondante de la tension de sortie $V_{out}$.

Le mode de réalisation décrit en relation avec la figure 7 permet de modéliser des coefficients synaptiques positifs et négatifs. En effet, chaque coefficient synaptique est représenté par la valeur de conductivité $G_i^P - G_i^B$, $i \in \{0, ... , N\}$, lorsque le coefficient synaptique est négatif si $G_i^B > G_i^P$.

La figure 8 représente schématiquement un circuit neuronal à impulsions à base de RRAM 800 ayant une structure différentielle selon un mode de réalisation de la présente description. Le circuit neuronal 800 comprend un étage d'entrée différentiel 802 et un étage de sortie 804.

L'étage d'entrée 802 comprend deux ensembles 806 et 808 de N+1 branches, comprenant chacun les éléments résistifs $G_i^P$ et $G_i^B$, $i \in \{0, ... ,N\}$. Chaque élément résistif $G_i^P$ et $G_i^B$ a une de ses électrodes, par exemple son électrode inférieure, reliée au rail de tension d'alimentation $V_{bot}$ par l'intermédiaire d'un transistor correspondant $T_i^P$ et $T_i^B$. Chaque transistor $T_i^P$, $T_i^B$ a par exemple sa grille reliée pour recevoir la tension correspondante $V_{in,i}$.

L'étage de sortie 804 comprend un transistor 810 et un transistor 812. Le transistor 810 est par exemple relié par ses noeuds de conduction principaux entre la ligne conductrice commune SL et le rail de tension de masse. Le transistor 812 est par exemple relié par ses noeuds de conduction principaux entre la ligne conductrice commune SL' et le rail de tension de masse. La grille du transistor 810 est reliée à la ligne conductrice commune SL', alors que la grille du transistor 812 est reliée à la ligne conductrice commune SL.

L'étage de sortie 804 comprend en outre le comparateur 206, dont l'entrée positive est reliée à la ligne conductrice commune SL et dont l'entrée négative est reliée à la ligne conductrice commune SL'. Le comparateur 206 est utilisé pour générer une transition de sortie correspondante de la tension de sortie $V_{out}$ sur la base des niveaux relatifs des tensions $V_{SL}$ et $V_{SL}$' sur les lignes conductrices communes SL et SL'.

En outre, la sortie du comparateur 206 est reliée à la grille du transistor 510 par l'intermédiaire du circuit de retard 508 et, de façon similaire, à la grille d'un transistor 510' par l'intermédiaire d'un circuit de retard 508'. Comme le transistor 510 de la figure 5, le transistor 510 de la figure 8 est relié entre la ligne conductrice commune SL et le rail de masse. Le transistor 510 de la figure 5, le transistor 510 de la figure 8 est relié entre la ligne conductrice commune SL et le rail de masse.

La mise en oeuvre de l'étage de sortie 804 permet deux régimes de fonctionnement différents.

Dans le premier régime de fonctionnement, plutôt que de comprendre des impulsions de tension, les tensions d'entrée $V_{in,i}$, $i \in \{0, ..., N\}$ sont des niveaux de tension analogiques continus, qui sont par exemple fixes ou sensiblement fixes dans le temps. En fonctionnement, la tension de l'une des lignes conductrices communes SL ou SL' augmente et dépasse la tension sur l'autre ligne conductrice commune. Cela amènera l'un ou l'autre des transistors 810 et 812 à décharger progressivement vers la masse la ligne conductrice commune ayant la tension la plus faible. Lorsque la différence de tension entre les lignes conductrices communes SL et SL' dépasse la tension seuil $V_{th}$, le comparateur 206 générera une pulsation de tension sur la tension de sortie $V_{out}$, la durée de la pulsation de tension étant fonction du retard introduit par les circuits de retard 508, 508'. La comparaison de seuil est par exemple fonction de la structure du comparateur 206 et de la fuite de courant qui passe vers la masse à travers chacun des transistors 510 et 510'. Les deux circuits de retard 508, 508' et transistors 510, 510' provoquent en outre par exemple la réinitialisation de la tension sur les lignes conductrices communes SL et SL' à une tension proche de la tension de masse un retard après une transition de tension de la tension de sortie $V_{out}$. En outre, la réinitialisation de la tension sur les lignes conductrices communes SL et SL' réinitialise à son tour la tension de sortie $V_{out}$ du comparateur 206.

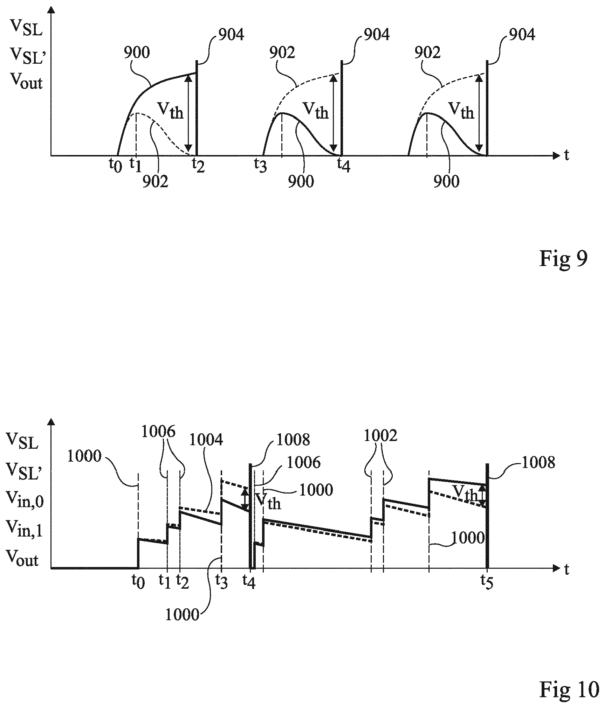

Un exemple de l'évolution temporelle des tensions des lignes conductrices communes et de la tension $V_{out}$, conformément au premier régime de fonctionnement 800, est représenté en figure 9.

La figure 9 est un chronogramme représentant des tensions présentes dans le circuit neuronal à impulsions à base de RRAM 800 selon un exemple de mode de réalisation.

Les évolutions temporelles des tensions $V_{SL}$ et $V_{SL}$', respectivement sur la ligne conductrice SL et sur la ligne conductrice SL', sont représentées par des courbes 900 et 902 et sont initialement proches de la masse. La tension de sortie $V_{out}$ est représentée par une courbe 904.

Dans l'exemple représenté, les tensions sur les lignes conductrices communes SL et SL' commencent à croître à un instant $t_0$ suite à l'application des tensions d'entrée analogiques $V_{in,i}$, $i \in \{0, ..., N\}$. A un instant $t_1$, la tension $V_{SL}$ dépasse la tension $V_{SL}$', amenant le transistor 812 à conduire plus que le transistor 810. La tension $V_{SL}$' est ainsi déchargée à la tension de masse, alors que la tension $V_{SL}$ continue à augmenter. A un instant $t_2$, la différence entre les tensions $V_{SL}$ et $V_{SL}$' dépasse la valeur de la tension seuil $V_{th}$. Par conséquent, le comparateur 206 génère la pulsation de tension sur la tension de sortie $V_{out}$, dont la durée dépend des circuits de retard 508, 508', qui appliquent par exemple sensiblement le même retard l'un que l'autre. Les tensions $V_{SL}$ et $V_{SL}$' sont ainsi réinitialisées à une valeur proche de la masse par l'intermédiaire des transistors 510, 510' activés par les circuits de retard 508.

Après la réinitialisation des tensions $V_{SL}$ et $V_{SL}$', celles-ci demeurent par exemple basses jusqu'à un instant $t_3$. Par exemple, les tensions $V_{SL}$ et $V_{SL}$' sont déchargées après un retard temporel fixe du circuit de retard 508, 508'. Une fois ce retard temporel écoulé, les lignes SL et SL' sont par exemple laissées flottantes jusqu'à ce qu'un nouveau cycle de fonctionnement neuronal commence. Un nouveau cycle de fonctionnement neuronal commence donc et, cette fois, c'est par exemple la tension $V_{SL}$' qui dépasse la tension $V_{SL}$. Les tensions $V_{SL}$ et $V_{SL}$' sont ensuite réinitialisées, conduisant à la génération de la pulsation de tension $V_{out}$ à un instant $t_4$.

De nouveau en relation avec la figure 8, dans le deuxième régime de fonctionnement du circuit 800, la charge des lignes conductrices SL et SL' diffère du premier régime de fonctionnement, les tensions d'entrée $V_{in,i}$, $i \in \{0, ..., N\}$ comprenant des impulsions de tension par exemple sous forme de pulsations de tension. Les rangées de transistors $T_i^P$ et $T_i^B$, $i \in \{0, ..., N\}$ reçoivent les impulsions de tension, provenant par exemples d'autres neurones du circuit neuronal. Les impulsions de tension provoquent une accumulation de charges sur les lignes conductrices communes SL et SL'.

La figure 10 est un chronogramme représentant un exemple de l'évolution temporelle des tensions d'entrée $V_{in,i}$, $i \in \{0, ..., N\}$ au niveau des grilles des transistors $T_i^P$ et $T_i^B$, des tensions $V_{SL}$ et $V_{SL}$' sur les lignes conductrices communes SL et SL' et de la tension $V_{out}$, conformément au deuxième régime de fonctionnement du circuit 800 est représenté en figure 10. En effet, par souci de clarté, on considère un cas dans lequel des impulsions d'entrée sont présentes sur seulement les tensions d'entrée $V_{in,0}$ et $V_{in,1}$ des transistors $T_0^P$, $T_0^B$ et $T_1^P$, $T_1^B$ du circuit neuronal 800.

Dans l'exemple représenté en figure 10, à un instant $t_0$, les transistors $T_0^P$ et $T_0^B$ reçoivent une impulsion de tension $V_{\{in,0\}}$ 1000, générant une première accumulation de charges sur les lignes conductrices communes SL et SL'. Par conséquent, les tensions $V_{SL}$ et $V_{SL}'$, représentées respectivement par des courbes 1002 et 1004, augmentent brutalement et ces tensions sont appliquées aux grilles des transistors 810 et 812, conduisant à une diminution progressive et relativement lente des deux tensions $V_{SL}$ et $V_{SL}'$. A un instant $t_1$, et encore à un instant $t_2$, les transistors $T_1^P$ et $T_1^B$ reçoivent une pulsation de tension $V_{\{in,1\}}$ 1006. Les tensions $V_{SL}$ et $V_{SL}'$ augmentent brutalement, puis diminuent progressivement. Ensuite, après la réception d'une impulsion de tension dans la tension $V_{in,0}$ à un instant $t_3$, de nouveau les deux tensions $V_{SL}$ et $V_{SL}'$ augmentent brutalement de nouveau, puis diminuent progressivement. Dans l'exemple de la figure 10, chacun des impulsions de tension aux instants $t_0$, $t_1$, $t_2$ et $t_3$ provoque la supériorité de la tension $V_{SL}'$ par rapport à la tension $V_{SL}$, et donc le transistor 810 conduit plus que le transistor 812, amenant la tension $V_{SL}$ à diminuer plus rapidement que la tension $V_{SL}'$. En raison de la différence de valeur entre les tensions $V_{SL}$ et $V_{SL}'$ à un instant $t_4$, la différence entre les tensions sur les lignes conductrices SL et SL' devient supérieure à la tension seuil $V_{th}$, déclenchant la génération de la pulsation de sortie $V_{out}$ et la réinitialisation à une tension proche de la tension de masse, des tensions $V_{SL}$ et $V_{SL}'$. Un nouveau cycle neuronal commence ensuite par exemple et, à un instant $t_5$, la tension $V_{SL}$ devient supérieure à la tension $V_{SL}'$ d'une valeur supérieure à la tension seuil $V_{th}$.

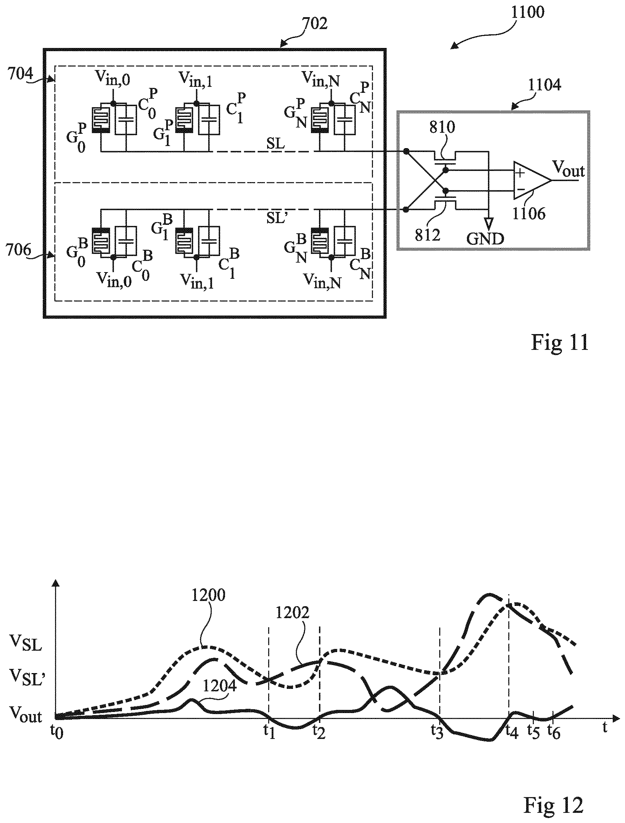

La figure 11 représente schématiquement un circuit neuronal analogique à base de RRAM 1100 ayant une structure différentielle selon un autre mode de réalisation de la présente description. Le circuit neuronal 1100 comprend l'étage d'entrée différentiel 702 et un étage de sortie 1104.

L'étage de sortie 1104 est similaire à l'étage de sortie 804 de la figure 8 en ce qu'il comprend les transistors 810 et 812 reliant les lignes conductrices communes SL et SL' à la masse et ayant leurs grilles reliées à la ligne conductrice commune opposée. L'étage de sortie 1104 diffère de l'étage de sortie 804 en ce que le comparateur 206 est remplacé par un amplificateur de tension 1106, qui est par exemple un amplificateur différentiel, et a par exemple un gain unitaire et les circuits de retard 508, 508' et les transistors 510, 510' sont omis. Par conséquent, la tension de sortie $V_{out}$ est générée sous forme d'une tension continue analogique et ne comprend plus de pulsations ni d'impulsions de tension, contrairement au cas du circuit 800. La tension de sortie $V_{out}$ est par exemple le potentiel de membrane du circuit neuronal et est égale à la différence de tension $V_{SL} - V_{SL}'$. Cela permet de coder des valeurs positives ou négatives de la tension de sortie $V_{out}$.

La figure 12 est un chronogramme représentant des tensions présentes dans le circuit neuronal analogique à base de RRAM 1100 selon un exemple de mode de réalisation de la présente description.

Les valeurs des tensions $V_{SL}$ et $V_{SL}'$ sur les lignes conductrices sont représentées respectivement par des courbes en traits pointillés 1200 et 1202, alors que la tension de sortie $V_{out}$ est représentée par une courbe continue 1204.

Initialement, à un instant $t_0$, les tensions $V_{SL}$, $V_{SL}'$ et $V_{out}$ sont proches de la tension de masse. Entre l'instant $t_0$ et un instant $t_1$, la tension sur la ligne conductrice SL est supérieure à la tension sur la ligne conductrice SL'. Par conséquent, la tension de sortie $V_{out}$ est positive entre les instants $t_0$ et $t_1$. Entre l'instant $t_1$ et un instant $t_2$, la tension sur la ligne conductrice SL' devient supérieure à la tension sur la ligne conductrice SL, par conséquent, la tension de sortie $V_{out}$ devient négative. Pour des raisons similaires, la tension de sortie $V_{out}$ est positive entre l'instant $t_2$ et un instant $t_3$, négative entre l'instant $t_3$ et un instant $t_4$, positive entre l'instant $t_4$ et un instant $t_5$, négative entre l'instant $t_5$ et un instant $t_6$, puis positive après l'instant $t_6$.

Bien que la figure 11 représente un exemple d'un fonctionnement analogique appliqué à une structure différentielle du circuit neuronal similaire à celle de la figure 8, la personne du métier comprendra qu'un tel fonctionnement analogique pourrait être appliqué aux circuits neuronaux non différentiels 200, 300 des figures 2 et 3 respectivement ou au circuit neuronal différentiel 700 de la figure, qui ne comprend pas les transistors 810, 812. Cela implique par exemple de remplacer, dans les différents modes de réalisation, le comparateur 206 par l'amplificateur de tension 1106.

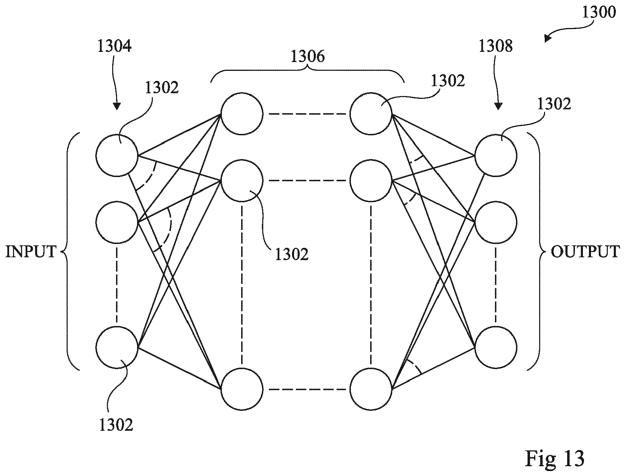

La figure 13 représente schématiquement un réseau neuronal 1300 constitué d'une pluralité de circuits neuronaux 1302 selon un exemple de mode de réalisation de la présente description.

Le réseau neuronal 1300 comprend une pluralité de couches et chaque couche du réseau neuronal 1300 est constituée d'une pluralité de circuits neuronaux 1300. Par exemple, le réseau comprend une couche d'entrée 1304 comprenant une pluralité de circuits neuronaux 1302, une ou plusieurs couches cachées 1306, chaque couche cachée comprenant une pluralité de circuits neuronaux 1302, et une couche de sortie 1308 comprenant une pluralité de circuits neuronaux 1302.

Les circuits neuronaux 1302 de la couche d'entrée 1304 reçoivent par exemple une ou plusieurs tensions à partir d'un signal INPUT, par exemple par l'intermédiaire d'un ou de plusieurs noeuds d'entrée du circuit.

Les tensions de sortie $V_{out}$ générées par les circuits neuronaux de la couche de sortie 1308 permettent par exemple de générer un signal de sortie OUTPUT.

Les circuits neuronaux 1302 de chaque couche du réseau 1300 sont par exemple réalisés par un même circuit parmi les différents circuits neuronaux décrits ici, ou par une pluralité de différents circuits neuronaux parmi les différents circuits neuronaux décrits ici, par exemple par un ou plusieurs des circuits neuronaux 200, 300, 500, 700, 800 ou 1100 des figures 2, 3, 5, 7, 8 et 11 respectivement.

Dans un autre exemple, dans chaque couche, tous les circuits neuronaux 1302 sont mis en oeuvre de la même façon parmi les modes de réalisation décrits en relation avec les figures 2, 3, 5, 7, 8 et 11. Les modes de mise en oeuvre du circuit neuronal changent par exemple d'une couche à une autre.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Par exemple, bien que des modes de réalisation aient été décrits dans lesquels les éléments mémoire utilisés pour mettre en oeuvre des synapses d'entrée des circuits neuronaux sont des éléments FTJ, la personne du métier comprendra que, dans des variantes de mises en oeuvre, d'autres types d'éléments mémoire résistifs programmables pourraient être utilisés.

Enfin, la mise en oeuvre pratique des modes de réalisation et variantes décrits est à la portée de la personne du métier à partir des indications fonctionnelles données ci-dessus.

## Revendications

1. Circuit neuronal (200, 300, 500, 700, 800, 1100) comprenant :

   - une première pluralité de synapses, comprenant chacune un premier élément mémoire résistif (**G**$_i$, $\mathbf{G_i^P}$) ayant une capacité parasite associée (**C**$_i$, $\boldsymbol{C_i^P}$), chacun des premiers éléments mémoire résistifs étant configuré pour fournir un courant à une première ligne conductrice commune (SL) ; et
   - un dispositif de sortie (206, 1106) configuré pour comparer une première tension (**V**$_{SL}$) sur la première ligne conductrice commune à une tension seuil (**V**$_{th}$) et pour générer une tension de sortie (**V**$_{out}$) du circuit neuronal sur la base de la comparaison.

2. Circuit neuronal selon la revendication 1, dans lequel le dispositif de sortie est un comparateur de tension (206) configuré pour générer une transition de la tension de sortie (**V**$_{out}$) du circuit neuronal lorsque la première tension dépasse la tension seuil.

3. Circuit neuronal selon la revendication 1, dans lequel le dispositif de sortie est un amplificateur de tension (1106) configuré pour générer une tension de sortie analogique (**V**$_{out}$).

4. Circuit neuronal selon la revendication 2, comprenant en outre un premier circuit de retard (508) relié à une sortie du comparateur de tension (208) et configuré pour réinitialiser la première tension (**V**$_{SL}$) sur la première ligne conductrice commune (SL) en réponse à la transition de la tension de sortie (**V**$_{out}$).

5. Circuit neuronal selon la revendication 4, dans lequel le premier circuit de retard (508) est configuré pour propager avec retard la transition de la tension de sortie (**V**$_{out}$) et pour provoquer ainsi la décharge complète de chacune des capacités parasites (**C**$_i$, $\boldsymbol{C_i^p}$) lorsque la première tension (**V**$_{SL}$) devient supérieure à la tension seuil (**V**$_{th}$).

6. Circuit neuronal selon l'une quelconque des revendications 1 à 5, dans lequel le premier élément résistif (**G**$_i$, $\mathbf{G_i^P}$) de chaque synapse est relié à une sortie d'un circuit neuronal correspondant supplémentaire.

7.

Circuit neuronal selon l'une quelconque des revendications 1 à 6, dans lequel le premier élément résistif (**G$_i$**, $G^P_i$ ) de chaque synapse est relié à une tension d'alimentation (**V$_{bot}$**) par l'intermédiaire d'un premier transistor correspondant (**T$_i$**, $T^P_i$ ), chacun des premiers transistors ayant sa grille reliée à une sortie (**V$_{in,i}$**) d'un circuit neuronal correspondant supplémentaire.

8. Circuit neuronal selon l'une quelconque des revendications 1 à 7, dans lequel chaque synapse comprend en outre un deuxième élément mémoire résistif ( $G^B_i$ ) ayant une capacité parasite associée ( $C^B_i$ ), chacun des deuxièmes éléments mémoire résistifs étant configuré pour fournir un courant à une deuxième ligne conductrice commune (SL'), la deuxième ligne conductrice fournissant la tension seuil (**V$_{SL}$'**) au dispositif de sortie (206, 1106).

9. Circuit neuronal selon la revendication 8 dans sa dépendance à la revendication 5, dans lequel le deuxième élément résistif ( $G^B_i$ ) de chaque synapse est relié à la sortie du circuit neuronal correspondant supplémentaire.

10. Circuit neuronal selon la revendication 8 dans sa dépendance à la revendication 7, dans lequel le deuxième élément résistif ( $G^B_i$ ) de chaque synapse est relié à la tension d'alimentation (**V$_{bot}$**) par l'intermédiaire d'un deuxième transistor correspondant ( $T^B_i$ ), chacun des deuxièmes transistors ayant sa grille reliée à une sortie (**V$_{in,i}$**) du circuit neuronal correspondant supplémentaire.

11. Circuit neuronal selon l'une quelconque des revendications 8 à 10 dans leur dépendance à la revendication 4, comprenant en outre un deuxième circuit de retard (508) relié à la sortie du comparateur de tension (206) et configuré pour réinitialiser la tension seuil (**V$_{SL}$'**) sur la deuxième ligne conductrice commune (SL') en réponse à la transition de la tension de sortie (**V$_{out}$**).

12. Circuit neuronal selon l'une quelconque des revendications 1 à 11, dans lequel les premiers éléments mémoire résistifs ( $G^P_i$ , **G$_i$**) sont des éléments à jonction ferro-tunnel.

13. Circuit neuronal selon l'une quelconque des revendications 1 à 12, dans lequel la capacité parasite (**C$_i$**, $C^P_i$ ) associée à chaque élément mémoire résistif ( $G^P_i$ , **G$_i$**) est située uniquement dans la synapse.

14. Circuit neuronal selon l'une quelconque des revendications 1 à 13, dans lequel la première tension (**V$_{SL}$**) sur la première ligne conductrice commune à un instant t respecte l'équation suivante :

$$V_{SL} = \frac{1}{C} \int_0^t \sum_{i=0}^N V_i(s) G_i \, ds,$$

où, N est le nombre de synapse, $C = \sum_{i=0}^N C_i$ , **C$_i$** étant la valeur de la capacité parasite associée à une synapse, **V$_i$(s)** est une tension appliquée entre des électrodes de l'élément résistif (**G$_i$**, $G^p_i$ ) à un instant **s**, antérieur à l'instant **t**, et où **G$_i$** est la conductance de l'élément résistif.

15. Circuit neuronal selon l'une quelconque des revendications 1 à 14, dans lequel le dispositif de sortie (206, 1106) comprend un transistor (510) configuré pour décharger la capacité parasite associée ($C_i$, $C_i^p$) lorsque la première tension ($V_{SL}$) devient supérieure à la tension de seuil ($V_{th}$).

16. Réseau neuronal (1300) comprenant une pluralité de couches de circuits neuronaux (200, 300, 500, 700, 800, 1100) selon l'une quelconque des revendications 1 à 15.

Fig 1

Fig 2

Fig 3

Fig 4

Fig 5

Fig 6

Fig 7

Fig 8

$V_{SL}$
$V_{SL}'$
$V_{out}$

900
904
902
904
902
904

$V_{th}$
$V_{th}$
$V_{th}$

$t_0$ $t_1$
902
$t_2$
$t_3$
900
$t_4$
900

t

Fig 9

$V_{SL}$
$V_{SL}'$
$V_{in,0}$
$V_{in,1}$
$V_{out}$

1000
1006
1004
1008
1006
1002
1008

1000
$V_{th}$
1000

1000

$t_0$ $t_1$ $t_2$ $t_3$ $t_4$
1000
$t_5$
t

Fig 10

702

1100

704

$V_{in,0}$  $C_0^P$  $V_{in,1}$  $C_1^P$  $V_{in,N}$  $C_N^P$

1104

810

$G_0^P$  $G_1^P$  $G_N^P$  SL

$V_{out}$

+

−

1106

706  $G_0^B$  $G_1^B$  SL'  $G_N^B$

812  GND

$V_{in,0}$  $C_0^B$  $V_{in,1}$  $C_1^B$  $V_{in,N}$  $C_N^B$

Fig 11

1200

1202

$V_{SL}$

$V_{SL'}$

$V_{out}$

1204

$t_0$  $t_1$  $t_2$  $t_3$  $t_4$ $t_5$ $t_6$  t

Fig 12

Fig 13

**EP 4 354 352 A1**

Europäisches Patentamt
European Patent Office
Office européen des brevets

# RAPPORT DE RECHERCHE EUROPEENNE

Numéro de la demande

EP 23 20 3111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/232905 A1 (DALGATY THOMAS [FR] ET AL) 29 juillet 2021 (2021-07-29) * abrégé * * alinéa [0001] – alinéa [0017] * * alinéa [0050] – alinéa [0141]; figures 1-25 * | 1-16 | INV. G06N3/065 |
| X | THOMAS SHERIN A ET AL: "Analysis of Parasitic Effects in a Crossbar in CMOS Based Neuromorphic System for Pattern Recognition Using Memristive Synapses", IEEE TRANSACTIONS ON NANOTECHNOLOGY, IEEE, USA, vol. 21, 13 juillet 2022 (2022-07-13), pages 380-389, XP011915730, ISSN: 1536-125X, DOI: 10.1109/TNANO.2022.3190903 [extrait le 2022-07-14] * abrégé * * Chapitres I-V; page 380 – page 389; figures 1-13; tableaux I-V * | 1-16 | |
| X | REN KUAN ET AL: "VETAM-M: A General Model for Voltage-Controlled Memcapacitive-Coupled Memristors", IEEE TRANSACTIONS ON CIRCUITS AND SYSTEMS II: EXPRESS BRIEFS, IEEE, USA, vol. 69, no. 3, 12 août 2021 (2021-08-12), pages 1717-1721, XP011903247, ISSN: 1549-7747, DOI: 10.1109/TCSII.2021.3103553 [extrait le 2022-03-15] * abrégé * * Chapitres I-V; page 1717 – page 1721; figures 1-8 * | 1-16 | DOMAINES TECHNIQUES RECHERCHES (IPC) G06N |

-/--

Le présent rapport a été établi pour toutes les revendications

| Lieu de la recherche | Date d'achèvement de la recherche | Examinateur |
|---|---|---|
| La Haye | 6 février 2024 | Hasnas, Sergiu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

22

Europäisches
Patentamt

European
Patent Office

Office européen
des brevets

# RAPPORT DE RECHERCHE EUROPEENNE

Numéro de la demande

**EP 23 20 3111**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GABRIEL MARANHÃO ET AL: "Low-power hybrid memristor-CMOS spiking neuromorphic STDP learning system", IET CIRCUITS DEVICES AND SYSTEMS, THE INSTITUTION OF ENGINEERING AND TECHNOLOGY, GB, vol. 15, no. 3, 11 mars 2021 (2021-03-11), pages 237-250, XP006105755, ISSN: 1751-858X, DOI: 10.1049/CDS2.12018 * abrégé * * Sections 2.1-2.2; page 239 - page 241; figures 1-4 * ----- | 5,15 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 6 février 2024 | Hasnas, Sergiu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

# EP 4 354 352 A1

## ANNEXE AU RAPPORT DE RECHERCHE EUROPEENNE
## RELATIF A LA DEMANDE DE BREVET EUROPEEN NO.

EP 23 20 3111

06-02-2024

| Document brevet cité au rapport de recherche | Date de publication | Membre(s) de la famille de brevet(s) | Date de publication |
|---|---|---|---|
| US 2021232905 A1 | 29-07-2021 | EP 3855366 A1 | 28-07-2021 |
| | | FR 3106681 A1 | 30-07-2021 |
| | | US 2021232905 A1 | 29-07-2021 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BERDAN, RADU.** Low-power linear computation using nonlinear ferroelectric tunnel junction memristors. *Nature Electronics,* 2020, vol. 3.5